# EUROPÄISCHE PATENTSCHRIFT

(11) **EP 2 225 786 B1**
(45) Veröffentlichungstag und Bekanntmachung des Hinweises auf die Patenterteilung: **31.08.2011**
(21) Anmeldenummer: 08861884.8
(22) Anmeldetag: 02.10.2008
(51) Int. Cl.: H01M 2/12

(54) **VENTILSTOPFEN**
VALVE STOPPER
BOUCHON À SOUPAPE

(30) Priorität: 19.12.2007 DE 102007061784
(43) Veröffentlichungstag der Anmeldung: 08.09.2010
(73) Patentinhaber: VB Autobatterie GmbH & Co. KGaA, 30419 Hannover (DE)
(72) Erfinder: STREUER, Peter, 30559 Hannover (DE)
(74) Vertreter: Günther, Constantin
(86) Internationale Anmeldenummer: PCT/EP2008/008368
(87) Internationale Veröffentlichungsnummer: WO 2009/077023

(56) Entgegenhaltungen:
- EP-A- 0 601 491
- WO-A-01/82395
- DE-B3- 10 349 395
- DE-U1- 29 714 031
- US-A- 5 490 867
- US-A1- 2003 198 863

## Beschreibung

Die Erfindung betrifft einen Ventilstopfen zum Abdichten einer Behälteröffnung mit einem auf die Behälteröffnung aufsetzbaren Ventilkörper aus einem ersten, steifen Kunststoffmaterial und einem integral mit dem Ventilkörper verbundenen Ventilelement aus einem zweiten, elastischen Kunststoffmaterial, das elastischer als das erste Kunststoffmaterial ist, wobei das Ventilelement eine auf eine die Behälteröffnung begrenzende Anlagekante aufsetzbaren Dichtflächenabschnitt und ein Verbindungsteil hat, das sich vom Dichtflächenabschnitt zu einer zur Behälteröffnung gerichteten und mit dem zwischenliegenden Ventilelement im Abstand davon angeordnten Anlagefläche des Ventilkörpers erstreckt.

Derartige Ventilstopfen werden insbesondere zum Verschließen von Füll- und Kontrollöffnungen von Akkumulatoren, insbesondere von Blei-Säure-Batterien für Kraftfahrzeuge genutzt. Mit Hilfe der in den Ventilstopfen eingebauten Ventilelemente soll ein Gasaustritt ermöglicht werden, falls ein Überdruck in dem Batteriegehäuse entsteht.

Beispielsweise aus EP 1 194 962 B1 ist bekannt, eine elastische Kappe auf einen Rohrstutzen aufzusetzen, der eine Behälteröffnung einer Batteriezelle begrenzt. Oberhalb der elastischen Kappe ist ein den Batteriedeckel abschließender separater Verschlussdeckel aufgesetzt. Bei einem Überdruck kann Gas durch den Zwischenraum zwischen Rohrstutzen und elastischer Kappe aufgrund der elastischen Verformbarkeit der elastischen Kappe vom Zelleninneren nach Außen gelangen.

EP 1 001 905 B1 offenbart ein Dichtungsventil aus gummielastischem Material mit einem Stopfenteil, das in eine Behälteröffnung bis zu einem das Stopfenteil in radialer Richtung überragenden Stopfenkragen einführbar ist. An dem Stopfenteil ist mindestens ein Steuerkanal durch eine Ausnehmung im Stopfenteil ausgebildet, der sich von einer Unterseite des Stopfenteils in Richtung der Längsachse des Dichtungsventils bis zum Stopfenkragen erstreckt. An dem Stopfenkragen ist ein Dichtungswulst angeformt, der auf einen die Behälteröffnung umschließenden Behälterrand dichtend auflegbar ist. Zudem wird der Steuerkanal im Stopfenteil bis zum Dichtungswulst fortgeführt.

DE 103 49 395 B3 zeigt einen Ventilstopfen, bei dem ein Ventil aus einem elastischen Material einstückig an einem Grundkörper angeformt ist, so dass das Ventil und der Grundkörper ein Mehrkomponenten- Spritzgussteil bilden. Das als Formteil einstückige elastische Ventil hat einen Ventilkörper und einen daran angeformten Dichtungslappen, der im Querschnitt dünner als der Ventilkörper ausgebildet ist. Der Dichtungslappen ist am unteren Außenrandbereich des Ventilkörpers angeformt und besitzt die Form einer halbkreisförmigen Scheibe, die zum Abdichten an der Innenkante einer Hülse im Ventilkörper anliegt.

Ausgehend hiervon ist es Aufgabe der Erfindung, einen verbesserten Ventilstopfen zum Abdichten einer Behälteröffnung mit einem Ventilelement zu schaffen, dass bei einem definierten Druck zuverlässig anspricht.

Die Aufgabe wir mit dem Ventilstopfen der eingangs genannten Art dadurch gelöst, dass der Dichtflächenabschnitt über seinen gesamten Umfang über das Verbindungsteil hinausragt das Verbindungsteil mindestens eine an einen vorgesehenen Ventilöffnungsbereich des Dichtungsflächenabschnitts angrenzende Aussparung derart hat, dass im Bereich der mindestens einen Aussparung der radiale Abstand des Verbindungsteils zur benachbarten Außenkante des Dichtflächenabschnitts größer als im übrigen Bereich ist und das Verbindungsteil im Bereich der Aussparung kein Auflager für den Dichtflächeabschnitt bildet und dass der Dichtflächenabschnitt auf seiner zur Auflage an die Anlagekante an der Behälteröffnung vorgesehenen Oberfläche einen umlaufenden Wulst hat.

Durch die Aussparung im integral mit dem Dichtflächenabschnitt geformten Verbindungsteil wird erreicht, dass der federnde Bereich dort weicher als im übrigen Umfangsbereich des den Dichtflächenabschnitt auf die Anlagekante pressenden Verbindungsteils ist. Damit wird ein definiertes Ansprechen der Ventilfunktion in diesem Bereich ermöglicht. Das definierte Ansprechen wird zudem durch den Wulst gewährleistet, durch den die Gefahr des Verklebens des Dichtungsflächenabschnitts mit der Anlagekante der Behälteröffnung reduziert wird.

Das Verbindungsteil ist vorzugsweise zylinderförmig.. Das Verbindungsteil bildet somit einen Stamm des kreisförmigen Dichtflächenabschnitts. Das Verbindungsteil kann z. B. konzentrisch zum kreisförmigen Dichtflächenabschnitt angeordnet sein. Denkbar ist aber auch, dass das Verbindungsteil mehreckig ist, wie z. B. dreieckig, viereckig, fünfeckig etc. Dabei ist es vorteilhaft, wenn das Verbindungsteil eine im Querschnitt teilkreisförmige Aussparung oder eine im Querschnitt eckige Aussparung hat. Durch die auf die Form des Verbindungsteils abgestimmte Form der Aussparung kann ein bedarfsgerechter Ventilöffnungsbereich geschaffen werden.

Entscheidend ist, dass das Verbindungsteil den Dichtflächenabschnitt fest am Ventilkörper hält, so dass der Dichtflächenabschnitt im Bereich des Verbindungsteils nicht elastisch nachgibt, während durch die definierten Aussparungen, in denen der Dichtflächenabschnitt nicht durch das Verbindungsteil gehalten wird, die gewünschte Elastizität des Dichtflächenabschnitts sichergestellt wird, wobei die Form des Verbindungsteils und der Aussparung den gewünschten Ansprechdruck des Ventilelements wesentlich bestimmt.

Um ein in Massenfertigung preiswert herstellbares und zuverlässiges Mehrkomponenten-Ventilstopfenteil zu erhalten, geht das Verbindungsteil des Ventilelementes vorzugsweise in einen in einer ringförmigen Einsenkung in dem die Anlagefläche des Ventilkörpers tragenden Deckelteils aufgenommenen breiteren Abschnitt über. Damit wird erreicht, dass das Verbindungsteil fest in das Deckelteil eingebaut ist.

Besonders vorteilhaft ist es, wenn der breitere Abschnitt durch eine Öffnung im Ventilkörper radial nach außen geführt ist und integral mit einer an der Außenseite des Ventilkörpers angeformten Ringdichtung verbunden ist. Damit wird eine einteilige Ausführungsform des Ventilelementes der Ringdichtung erreicht, die bereits aufgrund ihrer Anordnung stabil im Ventilkörper getragen sind. Zudem wird die Fertigung durch die reduzierte Anzahl der Einspritzpunkte für die zwei unterschiedlichen Materialkomponenten vereinfacht.

Der Ventilstopfen ist vorzugsweise zum Einsatz in eine Füll- und Kontrollöffnung eines Akkumulators, insbesondere einer Bleistaterbatterie ausgestaltet und besitzt hierzu beispielsweise ein an geeigneter Stelle angeordnetes Außengewinde zum Einschrauben des Ventilstopfens in die Füll- und Kontrollöffnung sowie eine oder zwei im Abstand voneinander benachbarte Ringdichtungen.

Die Erfindung wird nachfolgend anhand eines Ausführungsbeispiels mit den beigefügten Zeichnungen näher erläutert. Es zeigen:
- Figur 1 -: Querschnittsansicht eines Ventilstopfens zum Einschrauben in einen Doppeldeckel einer Bleibatterie im abgewinkelten Schnitt A-A (Figur 3);
- Figur 2 -: Draufsicht auf einen Schnitt B - B des elastischen Ventilelementes;
- Figur 3 -: Draufsicht auf den Ventilstopfen aus Figur 1.

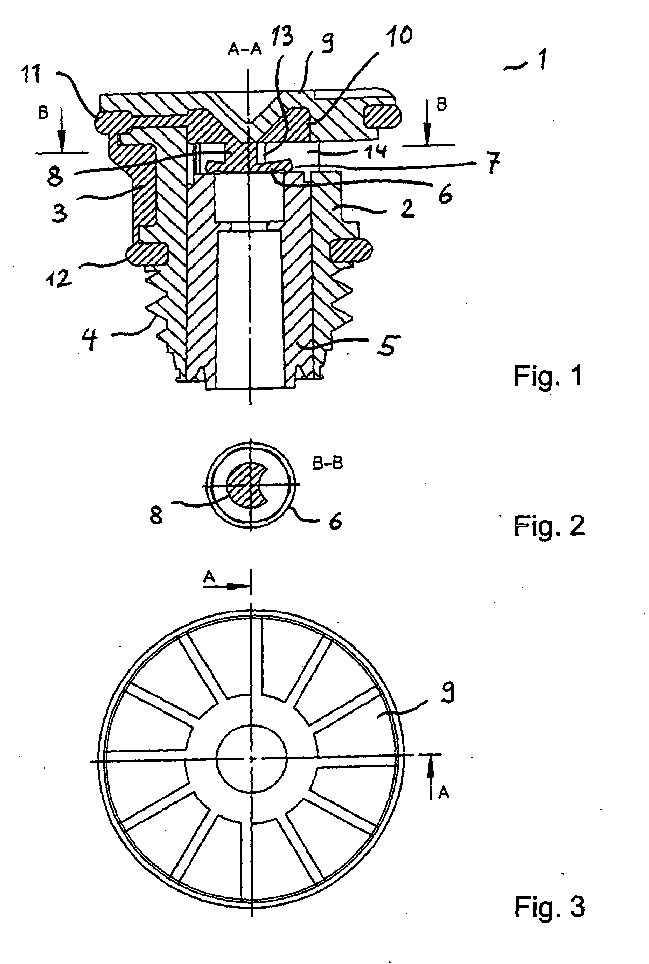

Figur 1 zeigt eine Querschnittsansicht einer Ausführungsform eines Ventilstopfens 1 , der zum Einschrauben in einen Doppeldeckel einer Bleibatterie vorgesehen ist. Ein Doppeldeckel hat in an sich bekannter Weise einen an den Zellenraum angrenzenden Unterdeckel, einen mit Stegen abgegrenzten Hohlraum und einen den Deckel oben abschließenden Oberdeckel. Durch die sich zwischen dem Unter- und Oberdeckel erstreckenden Stege werden Labyrinthe bereitgestellt, durch die ein Gasstrom zu einer Entgasungsöffnung geleitet werden kann und in dem Elektrolyt gesammelt und in die Zellen zurückgeleitet werden kann.

Der dargestellte Querschnitt A-A ist ein Eckschnitt, wobei die linke Hälfte von dem in der Figur 3 dargestellten oberen Punkt A bis zum Zentrum und die rechte Hälfte um 90 °C versetzt vom Zentrum bis zum Punkt A auf der rechten Seite der Draufsicht verläuft.

Der Ventilstopfen 1 hat einen Ventilkörper 2, der aus einem ersten, steifen Kunststoffmaterial, wie beispielsweise Polypropylen PP. gebildet ist. An dem Ventilkörper 2 ist ein Ventilelement 3 aus einem zweiten, elastischen Kunststoffmaterial integral angeformt. Das zweite, elastische Kunststoffmaterial kann beispielsweise ein gummielastischer Werkstoff sein. Geeignet sind Fluorelastomere, Silikonkautschukmaterialien oder sonstige thermoelastische Elastomere.

An dem Ventilkörper 2 ist ein Außengewinde 4 angeformt, um den Ventilstopfen 1 in eine Behälteröffnung einzuschrauben.

Weiterhin ist in dem Ventilkörper 2 ein Stopfenteil 5 eingesetzt, das nach dem Ausformen des Ventilkörpers 2 und des integral damit verbundenen Ventilelementes 3 in dem Ventilkörper 2 eingeführt wird. Das Stopfenteil 5 kann im unteren Bereich durch Verschweißen oder thermoplastischer Verformung fest mit dem Ventilkörper 2 verbunden werden. Der Ventilstopfen 1 wird hergestellt, indem zunächst der Ventilkörper 2 im Spritzgussverfahren ausgeformt wird. Anschließend wird das zweite elastische Material mit Hilfe einer geeigneten Form in den Ventilkörper 2 eingespritzt, um das Ventilelement 3 zu bilden. Das Ventilelement 3 hat im Wesentlichen einen scheibenförmigen Dichtflächenabschnitt 6, der an seiner, dem Stopfenteil 5 zugewandten Außenkante einen umlaufenden ringförmigen Wulst 7 trägt. Der Dichtflächenabschnitt 6 wird an einem Verbindungsteil 8 getragen, das an dem Dichtflächenabschnitt 6 gegenüberliegendes Ende mit einem Deckelteil 9 des Ventilkörpers 2 verbunden ist. Hierzu ist in dem Deckelteil 9 eine ringförmige Einsenkung 10 zur Aufnahme des sich an das Verbindungsteil 8 anschließenden zweiten, elastischen Kunststoffmaterials vorgesehen ist. Die Einsenkung 10 ist vorzugsweise derart, dass sich das Deckelteil 9 zur Mittelachse des Ventilstopfens 1 konisch zuläuft und so das Verbindungsteil 8 im Zentrum durch das erste, steifere Kunststoffmaterial des Ventilkörpers 2 abstützt.

Das zweite, elastische Kunststoffmaterial wird nach außen über eine Einspritzbohrung geführt, um am oberen Umfang des Ventilkörpers 2 eine erste Ringdichtung 11 und im Abstand davon nach unten angrenzend an das Gewinde 4 eine zweite Ringdichtung 12 für den Unterdeckel zu bilden. Die erste Ringdichtung 11 ist für den Oberdeckel vorgesehen.

Der Dichtflächenabschnitt 6 ragt über seinen gesamten Umfang über das Verbindungsteil 8 hinaus, um so elastisch mit auf dem Stopfenteil 5 aufzuliegen. Weiterhin ist in dem Verbindungsteil 8 mindestens eine Aussparung 13 vorgesehen, in dessen Bereich der Dichtflächenabschnitt 6 nicht auf dem Verbindungsteil 8 aufliegt. Durch die Aussparung 13 wird der federnde Bereich weicher ausgestaltet, als im umliegenden Bereich des Dichtflächenabschnitts um so ein definiertes Ansprechen der Ventilfunktion in diesem Bereich ermöglicht. Im Bereich der Aussparung 13 ist ein Entgasungskanal 14 im Ventilstopfen 1 vorgesehen, der an einen Entgasungskanal im Doppeldeckel (nicht dargestellt) angrenzt.

Figur 2 lässt eine Schnittansicht durch das Verbindungsteil 8 mit dem daran angeschlossenen Dichtflächenabschnitt 6 erkennen. Es wird deutlich, dass das Verbindungsteil 8 zylinderförmig ist und eine teilkreisförmige Aussparung 13 derart hat, dass das Verbindungsteil 8 im Bereich der Aussparung von einer Ebene zurückgesetzt ist, die durch die sich gegenüberliegenden Außenkanten der Aussparung 13 im Übergang zu dem Verbindungsteil 8 definiert ist.

Der Schnitt B-B aus Figur 2 ist in der Figur 1 dargestellt.

An Stelle eines zylinderförmigen Verbindungsteils 8 ist es aber auch denkbar, ein eckiges Verbindungsteil zu wählen, beispielsweise sogar ein drei-, vier-, oder mehreckiges Verbindungsteil. Die Aussparung 13 muss nicht teilkreisförmig sein. Sie kann ebenfalls auch eckig sein.

Figur 3 lässt eine Draufsicht auf den Ventilstopfen 1 aus Figur 1 erkennen. Dabei wird der über das Eck geführte Schnitt A-A der Figur 1 deutlich. Erkennbar ist weiterhin, dass der Deckelteil 9 im Zentrum eine konisch zulaufende Einsenkung hat, die eine zentrale Stütze für das Verbindungsteil 8 bildet.

## Patentansprüche

1. Ventilstopfen (1) zum Abdichten einer Behälteröffnung mit einem auf die Behälteröffnung aufsetzbaren Ventilkörper (2) aus einem ersten, steifen Kunststoffmaterial, einem auf eine die Behälteröffnung begrenzende Anlagekante dicht aufsetzbaren Dichtflächenabschnitt (6) und einem Verbindungsteil (8), das sich vom Dichtflächenabschnitt (6) zu einer zur Behälteröffnung gerichteten Anlagefläche des Ventilkörpers (2) erstreckt, wobei der Dichtflächenabschnitt (6) und das Verbindungsteil (8) aus einem zweiten, elastischen Kunststoffmaterial, das elastischer als das erste Kunststoffmaterial ist, besteht, **dadurch gekennzeichnet, dass** der Dichtflächenabschnitt über seinen gesamten Umfang über das Verbindungsteil hinausragt, das Verbindungsteil (8) mindestens eine an einen vorgesehenen Ventilöffnungsbereich des Dichtflächenabschnitts (6) angrenzende Aussparung (13) derart hat, dass im Bereich der Aussparung der radiale Abstand des Verbindungsteils (8) zur benachbarten Außenkante des Dichtflächenabschnitts größer als im übrigen Bereich ist und das Verbindungsteil (8) im Bereich der Aussparung keine Auflage für den Dichtflächenabschnitt (6) bildet, und der Dichtflächenabschnitt auf seiner zur Anlage an die Anlagekante vorgesehenen Oberfläche einen umlaufenden Wulst (7) hat.

2. Ventilstopfen (1) nach Anspruch 1 **dadurch gekennzeichnet, dass** das Verbindungsteil (8) zylinderförmig ist.

3. Ventilstopfen (1) nach Anspruch 1, **dadurch gekennzeichnet, dass** das Verbindungsteil (8) mehreckig ist.

4. Ventilstopfen (1) nach einem der vorhergehenden Ansprüche, **dadurch gekennzeichnet, dass** das Verbindungsteil eine im Querschnitt teilkreisförmige Aussparung hat.

5. Ventilstopfen (1) nach einem der vorhergehenden Ansprüche, **dadurch gekennzeichnet, dass** das Verbindungsteil (8) eine im Querschnitt eckige Aussparung hat.

6. Ventilstopfen (1) nach einem der vorhergehenden Ansprüche, **dadurch gekennzeichnet, dass** das Verbindungsteil (8) in einer in einer ringförmigen Einsenkung in dem die Anlagefläche des Ventilkörpers (2) tragenden Deckelteil (9) aufgenommenen breiteren Abschnitt übergeht.

7. Ventilstopfen (1) nach Anspruch 6, **dadurch gekennzeichnet, dass** der breitere Abschnitt durch eine Öffnung im Ventilkörper (2) radial nach außen geführt ist und integral mit mindestens einer an der Außenseite (2) des Ventilkörpers angeformten Ringdichtung (11, 12) verbunden ist.

8. Ventilstopfen (1) nach einem der vorhergehenden Ansprüche, **dadurch gekennzeichnet, dass** der Ventilstopfen (1) zum Einsatz in eine Füll- und Kontrollöffnung eines Akkumulators, insbesondere einer Bleibatterie, ausgestaltet ist.

9. Ventilstopfen (1) nach einem der vorhergehenden Ansprüche, **dadurch gekennzeichnet, dass** der Ventilstopfen (1) ein integral mit dem Ventilkörper (2) verbundenes Ventilelement (3) aus einem zweiten, elastischen Kunststoffmaterial, das elastischer als das erste Kunststoffmaterial ist, aufweist.

10. Ventilstopfen (1) nach Anspruch 9, **dadurch gekennzeichnet, dass** das Ventilelement (3) den Dichtflächenabschnitt (6) und das Verbindungsteil (8) aufweist.

## Claims

1. Valve stopper (1) for sealing a container opening, having a valve body (2) which may be placed on the container opening and is made of a first, rigid plastics material, a sealing surface portion (6) which may be placed sealingly on a contact edge bounding the container opening, and a connecting member (8) which extends from the sealing surface portion (6) to a contact surface of the valve body (2) directed towards the container opening, the sealing surface portion (6) and the connecting member (8) consisting of a second, resilient plastics material, which is more resilient than the first plastics material, **characterized in that** the sealing surface portion projects over its entire circumference beyond the connecting member, the connecting member (8) has at least one recess (13) adjoining an intended valve opening region of the sealing surface portion (6), such that in the region of the recess the radial distance between the connecting member (8) and the adjacent outer edge of the sealing surface portion is greater than elsewhere and in the region of the recess the connecting member (8) does not form a support for the sealing surface portion (6), and the sealing surface portion has a circumferential bead (7) on its surface provided for resting against the contact edge.

2. Valve stopper (1) according to Claim 1, **characterized in that** the connecting member (8) is cylindrical.

3. Valve stopper (1) according to Claim 1, **characterized in that** the connecting member (8) is polygonal.

4. Valve stopper (1) according to one of the preceding claims, **characterized in that** the connecting member has a recess which cross-sectionally takes the form of a segment of a circle.

5. Valve stopper (1) according to one of the preceding claims, **characterized in that** the connecting member (8) has a recess which is cross-sectionally angular,

6. Valve stopper (1) according to one of the preceding claims, **characterized in that** the connecting member (8) develops into a wider portion accommodated in an annular indentation in the cover member (9) bearing the contact surface of the valve body (2).

7. Valve stopper (1) according to Claim 6, **characterized in that** the wider portion is guided radially outwards through an opening in the valve body (2) and is connected integrally with at least one annular seal (11, 12) formed on the outside (2) of the valve body.

8. Valve stopper (1) according to one of the preceding claims, **characterized in that** the valve stopper (1) is configured for use in a filling and checking hole of a storage battery, in particular a lead battery.

9. Valve stopper (1) according to one of the preceding claims, **characterized in that** the valve stopper (1) comprises a valve element (3) connected integrally with the valve body (2) and made from a second, resilient plastics material, which is more resilient than the first plastics material.

10. Valve stopper (1) according to Claim 9, **characterized in that** the valve element (3) comprises the sealing surface portion (6) and the connecting member (8).

## Revendications

1. Bouchon à soupape (1) pour l'étanchéité d'une ouverture d'un récipient, comprenant un corps de soupape (2) pouvant être placé sur l'ouverture du récipient, constitué d'un premier matériau rigide en plastique, d'une portion de surface d'étanchéité (6) pouvant être placée hermétiquement sur une arête d'appui limitant l'ouverture du récipient, et une partie de connexion (8) qui s'étend depuis la portion de surface d'étanchéité (6) jusqu'à une surface d'appui du corps de soupape (2) orientée vers l'ouverture du récipient, la portion de surface d'étanchéité (6) et la partie de connexion (8) se composant d'un deuxième matériau élastique en plastique qui est plus élastique que le premier matériau en plastique, **caractérisé en ce que** la portion de surface d'étanchéité fait saillie sur toute sa périphérie au-delà de la partie de connexion, la partie de connexion (8) présente au moins un évidement (13) adjacent à une région d'ouverture de soupape prévue sur la portion de surface d'étanchéité (6) de telle sorte que dans la région de l'évidement, la distance radiale de la partie de connexion (8) à l'arête extérieure adjacente de la portion de surface d'étanchéité soit plus grande que dans la région restante, et la partie de connexion (8), dans la région de l'évidement, ne forme pas d'appui pour la portion de surface d'étanchéité (6), et la portion de surface d'étanchéité présente, sur sa surface prévue pour s'appliquer contre l'arête d'appui, un bourrelet périphérique (7).

2. Bouchon à soupape (1) selon la revendication 1, **caractérisé en ce que** la partie de connexion (8) est cylindrique.

3. Bouchon à soupape (1) selon la revendication 1, **caractérisé en ce que** la partie de connexion (8) est polygonale.

4. Bouchon à soupape (1) selon l'une quelconque des revendications précédentes, **caractérisé en ce que** la partie de connexion présente un évidement de section transversale en forme de cercle partiel.

5. Bouchon à soupape (1) selon l'une quelconque des revendications précédentes, **caractérisé en ce que** la partie de connexion (8) présente un évidement de section transversale polygonale.

6. Bouchon à soupape (1) selon l'une quelconque des revendications précédentes, **caractérisé en ce que** la partie de connexion (8) se prolonge par une portion plus large reçue dans un renfoncement annulaire dans la partie de couvercle (9) portant la surface d'appui du corps de soupape (2).

7. Bouchon à soupape (1) selon la revendication 6, **caractérisé en ce que** la portion plus large est guidée radialement vers l'extérieur à travers une ouverture dans le corps de soupape (2) et est connectée intégralement à au moins un joint d'étanchéité annulaire (11, 12) façonné sur le côté extérieur (2) du corps de soupape.

8. Bouchon à soupape (1) selon l'une quelconque des revendications précédentes, **caractérisé en ce que** le bouchon à soupape (1) est configuré pour être inséré dans une ouverture de remplissage et de contrôle d'un accumulateur, notamment d'une batterie au plomb.

9. Bouchon à soupape (1) selon l'une quelconque des revendications précédentes, **caractérisé en ce que** le bouchon à soupape (1) présente un élément de soupape (3) connecté intégralement au corps de soupape (2), constitué d'un deuxième matériau élastique en plastique qui est plus élastique que le premier matériau en plastique,

10. Bouchon à soupape (1) selon la revendication 9, **caractérisé en ce que** l'élément de soupape (3) présente la portion de surface d'étanchéité (6) et la partie de connexion (8).
